# FASCICULE DE BREVET EUROPEEN

(11) **EP 2 834 085 B1**
(45) Date de publication et mention de la délivrance du brevet: **06.07.2016**
(21) Numéro de dépôt: 13713210.6
(22) Date de dépôt: 02.04.2013
(51) Int. Cl.: B60C 3/04, B60C 9/00, B60C 9/08

(54) **PNEUMATIQUE COMPORTANT UNE BANDE DE ROULEMENT ELARGIE**
REIFEN MIT ERWEITERTER LAUFFLÄCHE
TYRE COMPRISING A WIDENED TREAD

(30) Priorité: 06.04.2012 FR 1253195
(43) Date de publication de la demande: 11.02.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOHNSON, Philippe, F-63040 Clermont-Ferrand Cedex 9 (FR); METZGER, Julien, F-63040 Clermont-Ferrand Cedex 9 (FR); NOEL, Sébastien, F-63040 Clermont-Ferrand Cedex 9 (FR)
(74) Mandataire: Le Cam, Stéphane Georges Elie
(86) Numéro de dépôt international: PCT/EP2013/056911
(87) Numéro de publication internationale: WO 2013/150012

(56) Documents cités:
- WO-A1-2005/016668
- WO-A1-2010/139583
- FR-A1- 2 940 184

## Description

La présente invention concerne un pneumatique, à armature de carcasse radiale et plus particulièrement un pneumatique destiné à équiper un essieu comportant des roues jumelées pour des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Les propriétés d'endurance étant ainsi améliorées, pour augmenter la durée d'utilisation des pneumatiques avant rechapage, les concepteurs desdits pneumatiques cherchent naturellement à améliorer les propriétés d'usure des pneumatiques.

Afin d'augmenter la durée d'utilisation des pneumatiques, il est usuel de choisir des matériaux polymériques constitutifs de la bande de roulement présentant des propriétés de résistance en usure améliorées. Toutefois, de tels matériaux pénalisent le plus souvent les propriétés hystérétiques du pneumatique et leur utilisation n'est pas forcément optimale en termes de propriétés d'endurance pour les raisons énoncées précédemment.

Sachant par ailleurs que la durée de vie liée à l'usure du pneumatique dépend du volume de mélange des matériaux polymériques constitutifs de la bande de roulement à user, les inventeurs ont cherché à augmenter celui-ci.

Ils ont tout d'abord mis en évidence qu'une augmentation du volume de mélange des matériaux polymériques constitutifs de la bande de roulement selon la direction radiale conduit à des modifications des rigidités du pneumatique qui vont notamment à l'encontre des performances du pneumatique en termes de vitesse d'usure de la bande de roulement.

Ensuite, ils ont su mettre en évidence qu'une augmentation du volume de mélange des matériaux polymériques constitutifs de la bande de roulement selon la direction axiale a un impact positif sur les rigidités du pneumatique ainsi que sur la vitesse d'usure de la bande de roulement.

Le document WO2005/016668 décrit notamment un pneumatique dont le rapport de la largeur axiale de la bande de roulement sur la largeur axiale maximale du pneumatique est strictement supérieur à 0,89.

Par ailleurs, l'usage de pneumatiques sur des véhicules de type poids-lourds à usage routier, notamment lorsqu'ils sont en monte jumelée sur un essieu moteur ou sur des remorques conduit à des utilisations non voulues en mode dégonflé. En effet, les analyses réalisées montrent qu'il est fréquent que des pneumatiques soient utilisés en mode sous-gonflé sans que le chauffeur s'en aperçoive. Des pneumatiques sous-gonflés sont ainsi régulièrement utilisés sur des distances parcourues non négligeables. Le pneumatique ainsi utilisé subit des déformations plus importantes que dans les conditions normales d'utilisation qui peuvent conduire à une déformation des câbles de l'armature de carcasse de type « flambement » qui est fortement pénalisante notamment pour supporter les contraintes liées aux pressions de gonflage.

Les essais réalisés ont mis en évidence que ce phénomène de flambement est exacerbé avec l'élargissement selon la direction axiale des bandes de roulement des pneumatiques.

Afin de limiter ce problème lié au risque de flambement des éléments de renforcement de l'armature de carcasse, il est possible d'utiliser des câbles frettés par un fil supplémentaire entourant le câble pouvant prévenir le flambement du câble, le fil de frette semblant conférer un effet s'opposant au flambement et donc limitant des flexions trop importantes du pneumatique dans certaines zones. Les pneumatiques ainsi réalisés, s'ils présentent moins de risques d'endommagement liés à des roulages à faible pression de gonflage, présentent toutefois des performances en termes d'endurance en flexion atténuées du fait notamment du frottement entre le fil de frette et les fils extérieurs du câble lors des déformations du pneumatique en roulage dans des conditions normales d'utilisation.

Il est encore possible pour pallier à ce problème de flambement des câbles lors de roulage avec un pneumatique sous-gonflé, d'augmenter au moins localement, dans les zones en vis-à-vis de la zone de l'armature de carcasse susceptible de présenter un flambement, l'épaisseur de la couche de caoutchouc qui forme la paroi interne de la cavité du pneumatique. Mais une augmentation, même locale, de l'épaisseur de la couche de caoutchouc séparant l'armature de carcasse de la cavité du pneumatique conduit à un coût du pneumatique plus élevé, le mélange de caoutchouc constituant la paroi interne du pneumatique étant un matériau très onéreux.

Les documents FR 2 940 184 et WO 2010/139583 décrivent des câbles métalliques non frettés à couches saturées, au moins une couche interne étant gainée d'une couche constituée d'une composition polymérique telle qu'une composition de caoutchouc.

Les inventeurs se sont ainsi donnés pour mission d'être en mesure de fournir des pneumatiques destinés à équiper des véhicules selon une monte jumelée dont le compromis entre les performances d'endurance et d'usure est améliorée y compris dans des conditions de roulage en mode sous-gonflé, le coût du pneumatique n'étant pas augmenté.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, le rapport de la largeur axiale de la bande de roulement sur la largeur axiale maximale du pneumatique étant strictement supérieur à 0,85 et les éléments de renforcement d'au moins une couche de l'armature de carcasse étant des câbles métalliques non frettés à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

Selon un mode de réalisation préférée de l'invention, le rapport d'aspect H/S est strictement supérieur à 0,55, et de préférence supérieur à 0,60.

Le rapport d'aspect H/S est le rapport de la hauteur H du pneumatique sur jante sur la largeur axiale maximale S du pneumatique, lorsque ce dernier est monté sur sa jante de service et gonflé à sa pression nominale. La hauteur H, est définie comme la différence entre le rayon maximal de la bande de roulement et le rayon minimal du bourrelet.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Des câbles dits "à couches" (*"layered cords"*) ou "multicouches" sont des câbles constitués d'un noyau central et d'une ou plusieurs couches de brins ou fils pratiquement concentriques disposées autour de ce noyau central.

Au sens de l'invention, une couche saturée d'un câble à couches est une couche constituée de fils dans laquelle il n'existe pas suffisamment de place pour y ajouter au moins un fil supplémentaire.

Des câbles métalliques à couches saturées, dont au moins une couche interne est gainée d'une couche constituée d'une composition polymérique telle qu'une composition de caoutchouc, présentent au test dit de perméabilité un débit nul.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Des câbles présentant au test dit de perméabilité un débit inférieur à 2 cm3/mn présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention, qui combine, comparé à un pneumatique usuel de même dimension, une largeur axiale de la bande de roulement plus importante et au moins une couche de l'armature de carcasse constitués de câbles métalliques non frettés à couches saturées, au moins une couche interne étant gainée, permet d'améliorer son endurance lors d'un usage en mode sous-gonflé notamment lorsque celui-ci est en monte jumelée sans nuire à ses propriétés d'endurance en roulage dans des conditions normales, ses propriétés en termes d'usure étant par ailleurs améliorées.

Comme expliquée précédemment l'élargissement selon la direction axiale de la bande de roulement permet d'améliorer les propriétés d'usure du pneumatique.

Par ailleurs, les inventeurs ont su mettre en évidence que les câbles métalliques non frettés à couches saturées, au moins une couche interne étant gainée, de l'armature de carcasse permettent d'améliorer significativement les propriétés d'endurance de l'armature de carcasse lorsque le pneumatique est utilisé dans des conditions de faible gonflage sans nuire à ses propriétés d'endurance en roulage dans des conditions normales et sans pénaliser ses coûts de production. Les inventeurs interprètent ces résultats par la présence de la gaine de caoutchouc autour d'au moins une couche des câbles métalliques qui permet d'accepter le pliage dudit câble avec des rayons de courbure relativement faibles sans que ledit câble ou les fils le constituant ne soit altérés. Les inventeurs pensent avoir mis en évidence que la présence de la gaine évite un foisonnement dudit câble c'est-à-dire qu'elle évite un écartement des fils constituants le câble lorsque celui-ci est plié avec des rayons de courbure très faibles et prévient ainsi les risques de rupture desdits fils.

Contrairement aux solutions évoquées précédemment qui consistent à limiter la courbure des câbles de l'armature de carcasse du pneumatique lorsque celui-ci est utilisé en mode sous-gonflé, l'invention prévient les risques de rupture des fils constituant le câble, celui-ci subissant tout de même le pliage imposé du fait de la faible pression de gonflage.

En d'autres termes, le pneumatique selon l'invention et plus précisément les éléments de renforcement de son armature carcasse subissent le pliage imposé par un gonflage inapproprié dudit pneumatique et la nature desdits éléments de renforcement, c'est-à-dire la présence de la gaine de caoutchouc autour d'au moins une couche des câbles métalliques, permet d'améliorer l'endurance desdits câbles subissant un tel pliage et en conséquence d'améliorer l'endurance du pneumatique en mode sous-gonflé.

La composition de caoutchouc formant la gaine autour d'au moins une couche interne desdits câbles métalliques d'au moins une couche de l'armature de carcasse, qui peut être non réticulable, réticulable ou réticulée, est de préférence à base d'au moins un élastomère diénique.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 5 qui représentent :
- figure1, une vue méridienne d'un schéma d'un pneumatique selon l'invention,
- figure 2, une vue méridienne d'un schéma d'une partie du pneumatique de la figure 1 pour illustrer la détermination d'une extrémité d'épaulement,
- figure 3, une représentation schématique d'une vue en coupe d'un premier exemple d'un câble d'armature de carcasse du pneumatique de la figure 1,
- figure 4, une représentation schématique d'une vue en coupe d'un deuxième exemple de câble d'armature de carcasse selon l'invention,
- figure 5, une représentation schématique d'une vue en coupe d'un troisième exemple de câble d'armature de carcasse selon l'invention.

Les figures ne sont pas représentées à l'échelle pour en simplifier la compréhension.

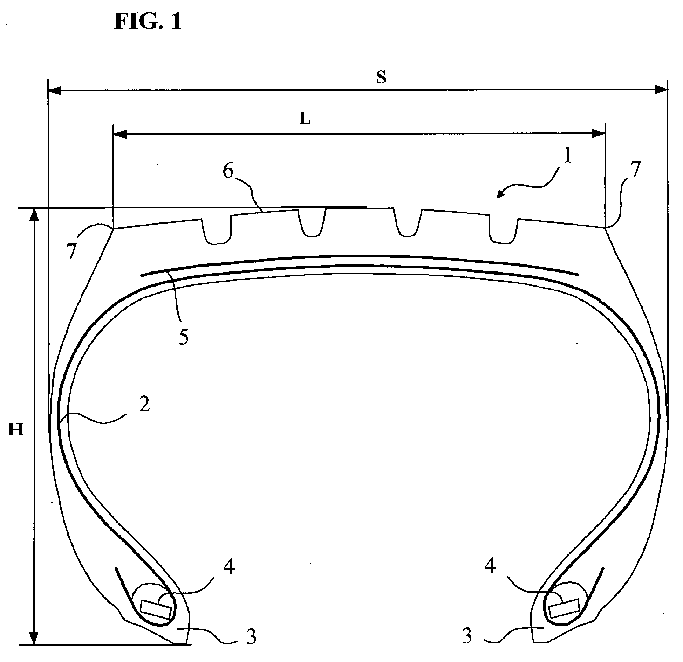

Sur la figure 1, le pneumatique 1, de dimension 315/80 R 22.5, a un rapport de forme H/S égal à 0,80, H étant la hauteur du pneumatique 1 sur sa jante de montage et S sa largeur axiale maximale. Ledit pneumatique comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6.

L'armature de sommet 5 est formée radialement de l'intérieur à l'extérieur :
- d'une couche de triangulation formée de câbles métalliques inextensibles 9.35 non frettés, continus sur toute la largeur de la nappe, orientés d'un angle égal à 65°,
- d'une première couche de travail formée de câbles métalliques inextensibles 11.35 non frettés, continus sur toute la largeur de la nappe, orientés d'un angle égal à 18°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formée de câbles métalliques élastiques 6.35 non frettés, continus sur toute la largeur de la nappe, orientés d'un angle égal à 18° dans le même sens que les câbles métalliques de la seconde couche de travail.

L'ensemble de ces couches n'est pas représentée de manière détaillée sur les figures.

La largeur axiale L de la bande de roulement du pneumatique est mesurée entre les deux extrémités d'épaulement 7. La largeur L est égale à 275 mm.

Conformément à l'invention, le rapport de la largeur axiale L de la bande de roulement du pneumatique 1 sur sa largeur axiale maximale S est égal à 0.88 et donc bien supérieure à 0.85.

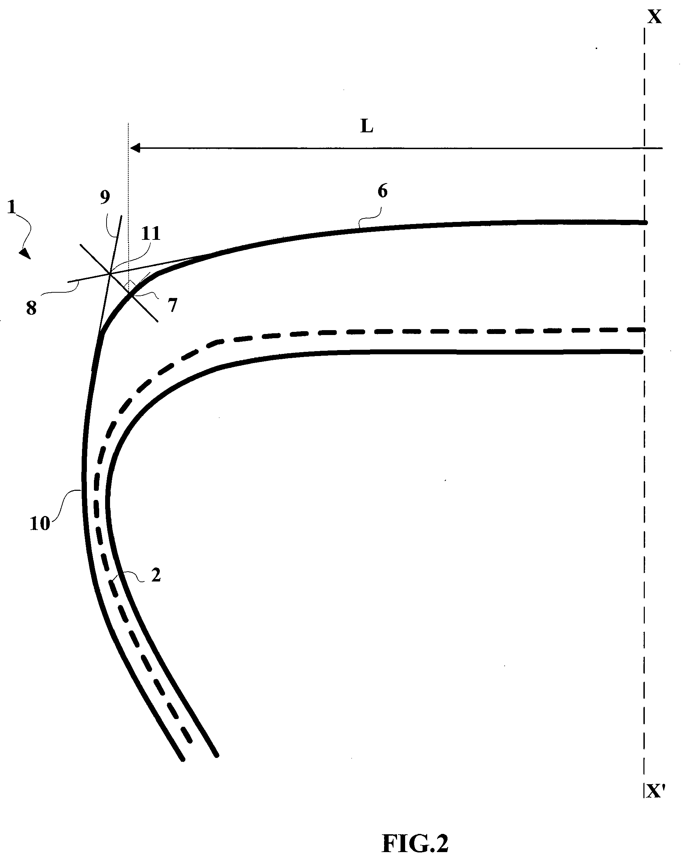

La figure 2 représente une vue méridienne partielle d'un schéma d'un pneumatique 1 dont les extrémités d'épaulement 7 ne sont pas aussi clairement apparentes que sur le schéma de la figure 1. La figure 2 ne représente notamment qu'une demi-vue d'un pneumatique qui se prolonge de manière symétrique par rapport à l'axe XX' qui représente le plan médian circonférentiel, ou plan équatorial, d'un pneumatique.

La figure 2 illustre comment les extrémités d'épaulement 7 peuvent être déterminées. Sur la figure 2 on observe ainsi une première tangente 8 à la surface d'une extrémité axialement extérieure de la bande de roulement 6 ; la surface de la bande de roulement est définie par la surface radialement extérieure ou sommet des sculptures. Une seconde tangente 9 à la surface de l'extrémité radialement extérieure d'un flanc 10 coupe la première tangente 8 en un point 11. La projection orthogonale de ce point 11 sur la surface extérieure du pneumatique définit l'extrémité d'épaulement 7.

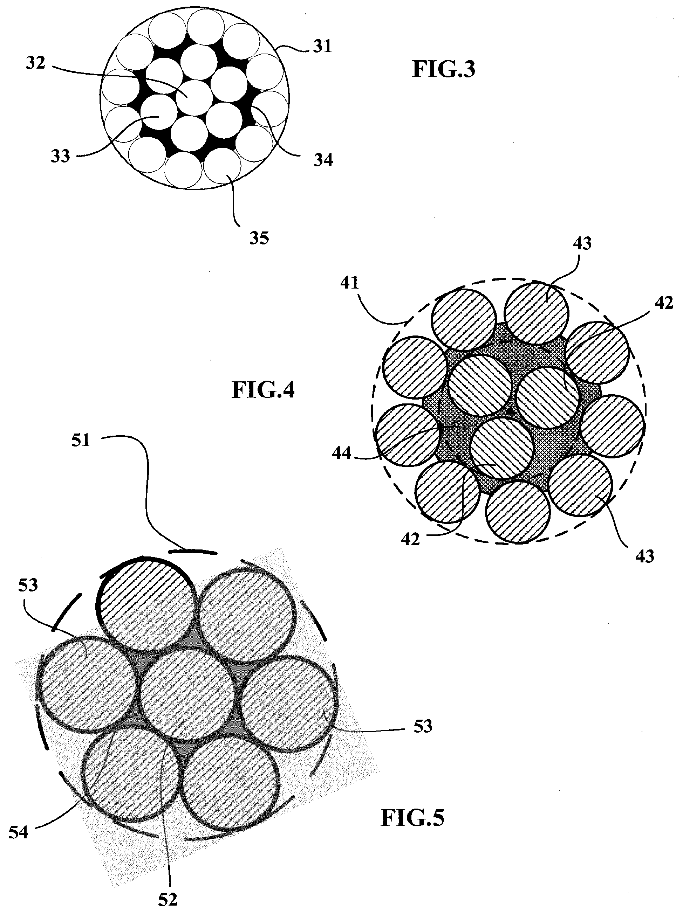

La figure 3 illustre une représentation schématique de la section d'un câble 31 d'armature de carcasse du pneumatique 1 de la figure 1. Ce câble 31 est un câble à couche de structure 1+6+12, non fretté, constitué d'un noyau central formée d'un fil 32, d'une couche intermédiaire formée de six fils 33 et d'une couche externe formée de douze fils 35.

Il présente les caractéristiques suivantes (d et p en mm) :
- structure 1+6+12;
- d₁ = 0.20 (mm);
- d₂ = 0.18 (mm);
- p₂ = 10 (mm)
- d₃ = 0.18 (mm);
- p₂ = 10 (mm),
- (d₂/ d₃) = 1;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 32 et de la couche intermédiaire formée des six fils 33 est gainé par une composition de caoutchouc 34 à base d'élastomère diénique non vulcanisé (à l'état cru). Le gainage est obtenu via une tête d'extrusion de l'âme constituée du fil 32 entouré des six fils 33, suivi d'une opération finale de retordage ou câblage des 12 fils 35 autour de l'âme ainsi gainé.

L'aptitude à la pénétration du câble 31, mesurée selon la méthode décrite précédemment, est égale à 95 %.

La composition élastomérique constituant la gaine de caoutchouc 24 est réalisée à partir d'une composition telle que décrite précédemment et présente dans le cas présent la même formulation, à base de caoutchouc naturel et de noir de carbone, que celle des couches de calandrage 13 de l'armature de carcasse que les câbles sont destinés à renforcer.

La figure 4 illustre une représentation schématique de la section d'un autre câble 41 d'armature de carcasse pouvant être utilisé dans un pneumatique selon l'invention. Ce câble 41 est un câble à couche de structure 3+9, non fretté, constitué d'une âme centrale formée d'un câble constitué de trois fils 42 retordus entre eux et d'une couche externe formée de neuf fils 43.

Il présente les caractéristiques suivantes (d et p en mm) :
- structure 3+9 ;
- d₁ = 0.18 (mm);
- p₂ = 5 (mm)
- (d₁/d₂) = 1;
- d₂ = 0.18 (mm);
- p₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 42 a été gainée par une composition de caoutchouc 44 à base d'élastomère diénique non vulcanisé (à l'état cru). Le gainage est obtenu via une tête d'extrusion du câble 42, suivi d'une opération finale de câblage des 9 fils 43 autour de l'âme ainsi gainée.

L'aptitude à la pénétration du câble 41, mesurée selon la méthode décrite précédemment, est égale à 95 %.

La figure 5 illustre une représentation schématique de la section d'un autre câble 51 d'armature de carcasse pouvant être utilisé dans un pneumatique selon l'invention. Ce câble 51 est un câble à couche de structure 1+6, non fretté, constitué d'un noyau central formé d'un fil 52 et d'une couche externe formée de six fils 53.

Il présente les caractéristiques suivantes (d et p en mm) :
- structure 1+6 ;
- d₁ = 0,200 (mm);
- (d₁/d₂) = 1,14;
- d₂ = 0,175 (mm);
- p₂ = 10 (mm),
avec d₁, le diamètre du noyau et d₂ et p₂, respectivement le diamètre et le pas d'hélice des fils de la couche externe.

Le noyau central constitué du fil 52 a été gainée par une composition de caoutchouc 54 à base d'élastomère diénique non vulcanisé (à l'état cru). Le gainage est obtenu via une tête d'extrusion du fil 52, suivi d'une opération finale de câblage des 6 fils 53 autour du noyau ainsi gainé.

L'aptitude à la pénétration du câble 41, mesurée selon la méthode décrite précédemment, est égale à 95 %.

Des essais ont été réalisés avec des pneumatiques réalisés selon l'invention conformément à la représentation des figures 1 et 3, et d'autres avec des pneumatiques dits de référence.

Des premiers pneumatiques de référence R1 de dimension 315/80 comme les pneumatiques selon l'invention diffèrent de ceux-ci en ce qu'ils présentent une bande de roulement moins large. La largeur de la bande de roulement L de ces pneumatiques est égale à 261 mm. Le rapport de la largeur axiale L de la bande de roulement d'un pneumatique R1 sur sa largeur axiale maximale S est égal à 0.83.

Les pneumatiques de référence R1 diffèrent encore des pneumatiques selon l'invention en ce que les éléments de renforcement de la carcasse ne comportent pas la couche de gainage 34.

Les deuxièmes pneumatiques de référence R2 de dimension 315/80 comme les pneumatiques selon l'invention présentent la même largeur L de la bande de roulement que ceux-ci. Le rapport de la largeur axiale L de la bande de roulement d'un pneumatique R2 sur sa largeur axiale maximale S est donc égal à 0.88 comme dans le cas des pneumatiques selon l'invention.

Les pneumatiques de référence R2 diffèrent par contre des pneumatiques selon l'invention en ce que les éléments de renforcement de la carcasse ne comportent pas la couche de gainage 34.

Les essais ont consistés à reproduire un roulage de pneumatiques jumelés dont l'un des pneumatiques est dans un état sous-gonflé. Pour cela, les trois types de pneumatiques, les pneumatiques selon l'invention et les pneumatiques de référence R1 et R2, sont testés en monte jumelée, l'un étant gonflé à 0.4 bar et donc à une faible pression et l'autre à 7 bars. Les conditions de gonflage sont rigoureusement les mêmes pour les trois types de pneumatiques.

Ils effectuent des roulages sur véhicule dans des conditions absolument identiques et reproduisant des roulages usuels suivis par des véhicules de type poids-lourds.

Les roulages sont interrompus régulièrement afin de porter la pression du pneumatique testé de 0,4 à 7 bars puis d'observer les pneumatiques. Le roulage reprend ensuite à 0,4 bar jusqu'au prochain arrêt. L'essai s'achève lorsqu'un endommagement irréversible est détecté sur les éléments de renforcement de l'armature de carcasse.

Les pneumatiques de référence R1 ont ainsi pu parcourir une distance moyenne de 2500 km dans les conditions imposées lors du test.

Les pneumatiques de référence R2 ont quant à eux parcourus une distance moyenne de 330 Km. Ce résultat met en évidence l'influence de l'élargissement de la bande de roulement sur les contraintes subies par les éléments de renforcement de l'armature de carcasse d'un pneumatique dans un état sous-gonflé.

Concernant les pneumatiques selon l'invention, ils ont parcourus une distance moyenne de 3500 Km. Comparé aux pneumatiques de référence R2, il apparaît clairement que la nature des éléments de renforcement de l'armature de carcasse, ceux-ci présentant une gaine de caoutchouc 34 conformément à l'invention, permet d'avoir des pneumatiques en mesure de subir les effets négatifs d'un sous-gonflage tout en conservant leur intégrité pendant une durée de roulage beaucoup plus importante.

La comparaison avec les pneumatiques de référence R2 montre encore que l'effet dû à l'élargissement de la bande de roulement est plus que compensé par la nature des éléments de renforcement de l'armature de carcasse, ceux-ci présentant une gaine de caoutchouc 34.

Les pneumatiques selon l'invention permettent ainsi d'améliorer les propriétés en matière d'usure comparé à des pneumatiques présentant une bande de roulement moins large tout en améliorant les propriétés en matière d'endurance pour ce qui concerne des roulages en mode sous-gonflé.

## Revendications

1. Pneumatique (1), à armature de carcasse radiale (2), comprenant une armature de sommet (5), elle-même coiffée radialement d'une bande de roulement (6) réunie à deux bourrelets (3) par l'intermédiaire de deux flancs, le rapport de la largeur axiale L de la bande de roulement sur la largeur axiale maximale S du pneumatique étant strictement supérieur à 0,85, **caractérisé en ce que** les éléments de renforcement d'au moins une couche de l'armature de carcasse (2) sont des câbles métalliques (31, 41, 51) non frettés à couches saturées, au moins une couche interne étant gainée d'une couche (34, 44, 54) constituée d'une composition polymérique telle qu'une composition de caoutchouc non réticulable, réticulable ou réticulée, de préférence à base d'au moins un élastomère diénique.

2. Pneumatique (1) selon la revendication 1, **caractérisé en ce que** le rapport d'aspect H/S est strictement supérieur à 0,55.

3. Pneumatique (1) selon la revendication 1 ou 2, **caractérisé en ce que** les éléments de renforcement métalliques d'au moins une couche de l'armature de carcasse sont des câbles métalliques (31, 41, 51) à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu'**une gaine (34, 44, 54) constituée d'une composition de caoutchouc non réticulable, réticulable ou réticulée à base d'au moins un élastomère diénique, recouvre, dans la construction [L+M], ladite première couche C1 et, dans la construction [L+M+N], au moins ladite couche C2.

4. Pneumatique (1) selon la revendication 3, **caractérisé en ce que** le diamètre des fils de la première couche (C1) est compris entre 0.10 et 0.5 mm, et **en ce que** le diamètre des fils des couches (C2, C3) est compris entre 0.10 et 0.5 mm.

5. Pneumatique (1) selon la revendication 3 ou 4, **caractérisé en ce que** le pas d'hélice d'enroulement desdits fils de la couche externe (C3) est compris entre 8 et 25 mm.

6. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

7. Pneumatique (1) selon l'une des revendications précédentes, **caractérisé en ce que** l'armature de sommet (5) comporte encore au moins une couche d'éléments de renforcement circonférentiels.

8. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

9. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Reifen (1) mit radialer Karkassenbewehrung (2), welcher eine Scheitelbewehrung (5) aufweist, welche selbst von einer Lauffläche (6) radial überdeckt wird, welche mit Hilfe von zwei Flanken mit zwei Wülsten (3) verbundenen ist, wobei das Verhältnis der axialen Breite L der Lauffläche zur maximalen axialen Breite S des Reifens unbedingt größer als 0,85 ist, **dadurch gekennzeichnet, dass** die Verstärkungselemente von mindestens einer Schicht der Karkassenbewehrung (2) unbewehrte Metalldrähte (31, 41, 51) mit gesättigten Schichten sind, wobei mindestens eine innere Schicht mit einer Schicht (34, 44, 54) ummantelt ist, welche von einer polymeren Zusammensetzung gebildet wird, wie beispielsweise eine Zusammensetzung aus nicht vernetzbarem, vernetzbarem oder vernetztem Kautschuk, vorzugsweise auf Basis von mindestens einem Dienelastomer.

2. Reifen (1) nach Anspruch 1, **dadurch gekennzeichnet, dass** das Seitenverhältnis H/S unbedingt größer als 0,55 ist.

3. Reifen (1) nach Anspruch 1 oder 2, **dadurch gekennzeichnet, dass** die metallischen Verstärkungselemente von mindestens einer Schicht der Karkassenbewehrung Metalldrähte (31, 41, 51) mit Aufbauschichten [L+M] oder [L+M+N] sind, welche als Verstärkungselement einer Karkassenbewehrung eines Reifens verwendbar sind, umfassend eine erste Schicht C1 mit L Fäden mit Durchmesser d₁, wobei L von 1 bis 4 geht, welche von mindestens einer Zwischenschicht C2 mit M Fäden mit Durchmesser d₂ umschlossen ist, welche zusammen spiralförmig gemäß einem Gang p₂ aufgewickelt sind, wobei M von 3 bis 12 geht, wobei die Schicht C2 eventuell von einer äußeren Schicht C3 mit N Fäden mit Durchmesser d₃ umschlossen ist, welche zusammen spiralförmig gemäß einem Gang p₃ aufgewickelt sind, wobei N von 8 bis 20 geht, und dass ein Mantel (34, 44, 54), welcher von einer Zusammensetzung aus nicht vernetzbarem, vernetzbarem oder vernetztem Kautschuk auf Basis von mindestens einem Dienelastomer gebildet wird, bei dem Aufbau [L+M] die erste Schicht C1 und bei dem Aufbau [L+M+N] mindestens die Schicht C2 umhüllt.

4. Reifen (1) nach Anspruch 3, **dadurch gekennzeichnet, dass** der Durchmesser der Fäden der ersten Schicht (C1) zwischen 0,10 und 0,5 mm liegt und dass der Durchmesser der Fäden der Schichten (C2, C3) zwischen 0,10 und 0,5 mm liegt.

5. Reifen (1) nach Anspruch 3 oder 4, **dadurch gekennzeichnet, dass** der Gang der Spirale der Wicklung der Fäden der äußeren Schicht (C3) zwischen 8 und 25 mm liegt.

6. Reifen (1) nach einem der vorhergehenden Ansprüche, **dadurch gekennzeichnet, dass** die Scheitelbewehrung (5) aus mindestens zwei Scheitelarbeitsschichten aus unelastischen Verstärkungselementen gebildet ist, welche von einer Schicht zur anderen gekreuzt sind, indem mit der Umfangsrichtung Winkel gebildet werden, die zwischen 10° und 45° liegen.

7. Reifen (1) nach einem der vorhergehenden Ansprüche, **dadurch gekennzeichnet, dass** die Scheitelbewehrung (5) noch mindestens eine Schicht aus in Umfangsrichtung verlaufenden Verstärkungselementen aufweist.

8. Reifen (1) nach einem der vorhergehenden Ansprüche, **dadurch gekennzeichnet, dass** die Scheitelbewehrung (5) radial im Außenbereich durch mindestens eine zusätzliche Bahn zum so genannten Schutz aus so genannten elastischen Verstärkungselementen vervollständigt wird, welche in Bezug auf die Umfangsrichtung unter einem Winkel, der zwischen 10° und 45° liegt, und in derselben Richtung ausgerichtet ist wie die unelastischen Elemente der Arbeitsbahn, welche zu ihr benachbart ist.

9. Reifen (1) nach einem der vorhergehenden Ansprüche, **dadurch gekennzeichnet, dass** die Scheitelbewehrung (5) außerdem eine Schicht zur Diagonalausfachung aufweist, welche von metallischen Verstärkungselementen gebildet wird, welche mit der Umfangsrichtung Winkel von größer als 60° einschließen.

## Claims

1. Tyre (1) with a radial carcass reinforcement (2) comprising a crown reinforcement (5), itself capped radially by a tread (6) which is connected to two beads (3) via two sidewalls, the ratio of the axial width L of the tread to the maximum axial width S of the tyre being strictly greater than 0.85, **characterized in that** the reinforcing elements of at least one layer of the carcass reinforcement (2) are non-wrapped metal cords (31, 41, 51) with saturated layers, at least one inner layer being sheathed with a layer (34, 44, 54) made up of a polymeric composition such as a composition of non-crosslinkable, crosslinkable or crosslinked rubber, preferably based on at least one diene elastomer.

2. Tyre (1) according to Claim 1, **characterized in that** the aspect ratio H/S is strictly greater than 0.55.

3. Tyre (1) according to Claim 1 or 2, **characterized in that** the metal reinforcing elements of at least one layer of the carcass reinforcement are layered metal cords (31, 41, 51) of [L+M] or [L+M+N] construction that can be used as reinforcing element in a tyre carcass reinforcement, comprising a first layer C1 of L threads of diameter d₁ with L ranging from 1 to 4, surrounded by at least one intermediate layer C2 of M threads of diameter d₂ wound together in a helix at a pitch p₂ with M ranging from 3 to 12, the said layer C2 possibly being surrounded by an outer layer C3 of N threads of diameter d₃ wound together in a helix at a pitch p₃ with N ranging from 8 to 20, and **in that** a sheath (34, 44, 54) made up of a non-crosslinkable, crosslinkable or crosslinked rubber composition based on at least one diene elastomer covers the said first layer C1 in the [L+M] construction and at least the said layer C2 in the [L+M+N] construction.

4. Tyre (1) according to Claim 3, **characterized in that** the diameter of the threads of the first layer (C1) is between 0.10 and 0.5 mm, and **in that** the diameter of the threads of the layers (C2, C3) is between 0.10 and 0.5 mm.

5. Tyre (1) according to Claim 3 or 4, **characterized in that** the helical pitch at which the said threads of the outer layer (C3) are wound is between 8 and 25 mm.

6. Tyre (1) according to one of the preceding claims, **characterized in that** the crown reinforcement (5) is formed of at least two working crown layers of inextensible reinforcing elements, crossed from one layer to the other, forming, with the circumferential direction, angles of between 10° and 45°.

7. Tyre (1) according to one of the preceding claims, **characterized in that** the crown reinforcement (5) further comprises at least one layer of circumferential reinforcing elements.

8. Tyre (1) according to one of the preceding claims, **characterized in that** the crown reinforcement (5) is supplemented radially on the outside by at least one additional ply referred to as a protective ply, of reinforcing elements called elastic, oriented with respect to the circumferential direction at an angle of between 10° and 45° and in the same direction as the angle formed by the inextensible elements of the working ply radially adjacent to it.

9. Tyre (1) according to any of the preceding claims, **characterized in that** the crown reinforcement (5) further includes a triangulation layer formed from metallic reinforcing elements forming angles of more than 60° with the circumferential direction.
